# EUROPEAN PATENT SPECIFICATION

(11) **EP 1 739 000 B1**
(45) Date of publication and mention of the grant of the patent: **10.08.2011**
(21) Application number: 05425457.8
(22) Date of filing: 27.06.2005
(51) Int. Cl.: B62K 23/06, B62M 25/04, B62K 23/04

(54) **Control device for a bicycle derailleur**
Schaltvorrichtung für eine Fahrradgangschaltung
Dispositif de commande pour dérailleur de bicyclette

(43) Date of publication of application: 03.01.2007
(73) Proprietor: CAMPAGNOLO S.R.L., I-36100 Vicenza (IT)
(72) Inventor: Dal Pra', Giuseppe, 36010 Zané (VI) (IT)
(74) Representative: Riccardi, Elisa

(56) References cited:
- EP-A- 0 894 702
- US-A- 4 461 189
- US-A- 5 390 565
- US-A- 5 493 933
- US-A- 5 845 537

## Description

The present invention refers to a control device used to drive a control cable of a bicycle derailleur.

The following description is made with reference to devices configured in particular for bicycles with curved handlebars (typical of racing bicycles) but the invention is independent of the shape of the handlebars and the consequent configuration of the actuation device and therefore it can also be used in devices for bicycles with straight handlebars, typical of mountain bike.

A bicycle is usually provided with two derailleurs, a front one associated with the crankset and a rear one associated wit the sprocket assembly. In both cases, the derailleur engages the transmission chain displacing it on toothed wheels of different diameters and with different numbers of teeth, so as to obtain different gear ratios. The derailleur, be it the rear or the front one, is moved in one direction by the traction action exerted by a normally sheathed inextensible cable (commonly known as Bowden cable) and in the opposite direction by the elastic return action of a spring provided in the derailleur itself. Normally, the direction in which the displacement is carried out by the return spring is that in which the chain passes from a toothed wheel with a greater diameter to a toothed wheel with a smaller diameter, i.e. that of so-called downward gear shifting; vice-versa, the traction action of the control cable occurs in the direction of so-called upward gear shifting, in which the chain moves from a toothed wheel with a smaller diameter to a toothed wheel with a greater diameter. It should be noted that in a front derailleur downward gear shifting corresponds to the passage to a lower gear ratio, whereas in a rear derailleur it corresponds to greater gear ratio.

The displacement in the two directions of the control cable of a derailleur is obtained through a control device, commonly known as integrated control, mounted so as to be easily manoeuvrable by the cyclist, i.e. normally on the handlebars, close to the handgrips thereof and in which there is also the brake lever for controlling the brake actuation cable of the front or rear wheel. Customarily, near to the left handgrip there are the control device of the front derailleur and the brake lever of the front wheel, and vice-versa near to the right handgrip there are the control device of the rear derailleur and the brake lever of the rear wheel.

In the control device, the control cable is traction or release actuated through winding and unwinding on a rotor element, commonly known as cable-winding bush, which rotation is controlled by the cyclist with proper control levers.

A first type of integrated control device is described in U.S. patent No. 5,400,675, wherein two distinct ratchet levers control the rotation, in the two directions, of the cable-winding bush and wherein one of the two levers also controls the brake control cable.

The control device has a support body mounted projecting from the handlebars towards the front of the bicycle, on which a first lever is mounted, coinciding with the front or rear brake lever, that rotates about a first axis to be actuated by the cyclist towards the handlebars during braking. The same brake lever is rotatable about a second axis, perpendicular to the first, which controls the rotation of the cable-winding bush about its axis according to a first direction of rotation, to carry out upward gear shifting. Such a rotation substantially follows the movement of the cyclist's hand that pushes the lever inwards, under "inwards" the direction towards the main axis of the bicycle being meant.

The device also has a second lever rotatable about a third axis, parallel to the second, also actuated inwards, that causes the released rotation of the cable-winding bush, through the effect of the spring of the derailleur, in the opposite direction of rotation to the first to carry out downward gear shifting.

The cable-winding bush has an indexing mechanism associated therewith, suitable for allowing the rotation of the cable-winding bush in the desired direction during gear shifting and for keeping the cable-winding bush in the fixed angular position when the two levers do not act upon it.

In a preferred embodiment of the control device, the cable-winding bush is mounted on the front end of the support body close to the zone where the brake lever is hinged. The control cable is wound on the cable-winding bush about an annular throat belonging to a plane substantially perpendicular to the advancing direction of the bicycle. The control cable of the derailleur that winds/unwinds about the cable-winding bush projects from the support body towards the inside, in a direction substantially perpendicular to a vertical plane passing through the axis of the cable-winding bush.

The described solution does, nevertheless, have some drawbacks.

A first drawback consists in that the cable-winding bush, being mounted on the front end of the support body, is a certain distance from the handlebars for which reason the control cable of the gearshift that projects from the support causes dangerous conditions for the cyclist, for example in case there is accidental contact with nearby cyclists in a race or, in case of falls, where the projecting cable entangles in the handlebars of other bicycles involved in the fall.

Another drawback consists of the unpleasant appearance given to the bicycle by the projecting cables and the reduction of the air penetration factor.

An integrated control device that partially overcomes such drawbacks is described in patent EP 504 118 B1 to the same Applicant, wherein two distinct ratchet levers control the rotation, in the two directions, of the cable-winding bush that is arranged with its rotation axis substantially parallel to the advancing axis of the bicycle.

Such a type of a device has a support body fixed to the handlebars of the bicycle, on which a first lever, or brake lever, for the traction of the brake cable, a second lever, or upward gear shifting lever, arranged adjacent along the brake lever for the upward gear shifting operation and a third lever, or downward gear shifting lever, projecting from the inner side of the support body, for the downward gear shifting operation are articulated.

The cable-winding bush has, in a cylindrical portion thereof towards the handlebars, an annular throat on which the widened head of the control cable is hooked and on which the control cable itself is wound and unwound. The annular throat belongs to a plane perpendicular to the advancing axis of the bicycle and the control cable, given its rigidity, has an exit direction from the throat belonging to the same plane. The control cable is then inserted in the outer sheath arranged with its end in a cylindrical recess made in the support close to the handlebars. The control cable that comes out from the throat reaches the end of the sheath through a curved through hole, indicated with 30 in fig. 8.

Such a solution has a drawback caused by the friction that is created between the control cable and the inner surface of the through hole in the curved zone during gear shifting when the control cable slides in the through hole and inside the sheath. Such friction causes a reduction in the performances of the control and an increase in wear between the parts mutually sliding in contact.

Other control devices suffering one or more of the above drawbacks are disclosed in US-A- 5 390 565 and in US-A- 5 493 933 which discloses all the features of the preamble of claim 1.

The object of the present invention is to overcome said drawbacks and create a control device without projecting cables and with characteristics of increased reliability and longer lifetime with respect to control devices of a known type.

Such an object is accomplished through a control device for driving a control cable of a derailleur of a bicycle, comprising:
- a support body connectable at one side to an end portion of bicycle handlebars and having a part projecting from said side;
- a cable-winding bush about which said control cable is wound/unwound, having a rotation axis essentially perpendicular to the end portion of the bicycle handlebars (2);
- at least one lever rotatable with respect to said support body to drive said cable-winding bush into rotation in a first direction of rotation,
said control cable coming out at from said support body from said side connectable to the handlebars,
characterised in that it comprises a deflection mechanism for said control cable arranged between said cable-winding bush and said side of said support body,

the deflection mechanism comprising a deflection wheel idle mounted on said support.

Preferably, the rotation axis of the deflection wheel is perpendicular to the rotation axis of the cable-winding bush.

Even more preferably, the outer surface of the deflection wheel has a throat for housing the control cable.

Preferably, the support body comprises a cylindrical recess made close to its side connectable to the handlebars to receive the end of the outer sheath of the control cable.

Advantageously, the control cable and the outer sheath come out from the control device adhering to the handlebars while the control cable, during gear shifting, winds on the deflection wheel with lower friction values with respect to the devices of the

### prior art.

Further features and advantages of the invention shall become clearer from the description of preferred embodiments, made with reference to the attached drawings, wherein:
- fig. 1 shows an isometric view of the control device of the invention mounted on the handlebars of a bicycle;
- fig. 2 shows a side view of partial sections along the section planes II-II and III-III of the control device of fig. 1;
- fig. 3 shows a diagrammatic side section view of a first embodiment of the control device of the invention;
- fig. 4 shows a diagrammatic view from above of a second embodiment of the control device of the invention;
- fig. 5 shows a front view of a deflection wheel used in any one of the embodiments of the previous figures.

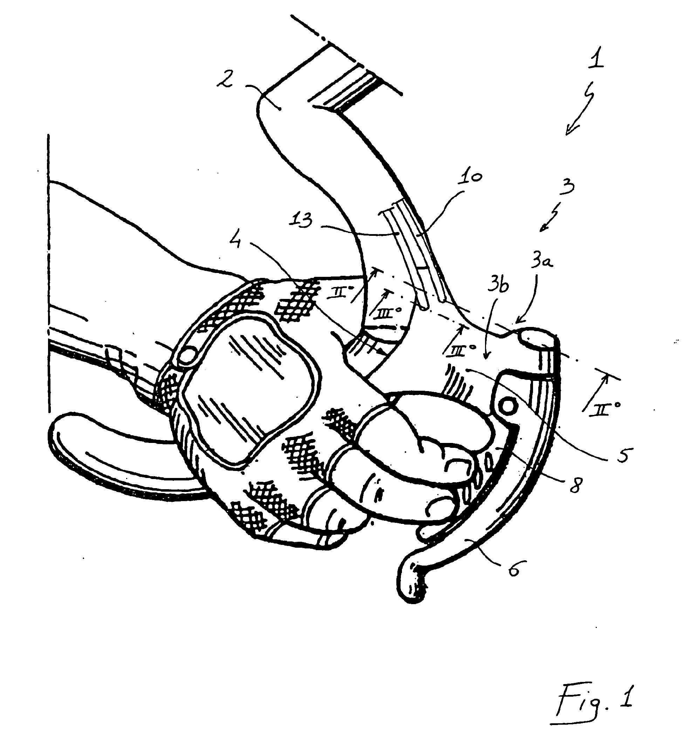

In fig. 1 the control device 1 of the invention is shown. The control device 1 is a right control device, namely mounted on the curved right end of the handlebars 2 to carry out the gear shifting operations of the rear derailleur, but it is clear that the inventive concept can be applied to the left control device mounted on the curved left end of the handlebars 2 and associated with the front derailleur, just as it can be applied to a right or left control device applied to straight handlebars, typical of mountain bikes.

The control device 1 comprises a support body 3 connected through one side 4 to the handlebars 2 and a part 5, projecting from the side 4, that can be gripped by the cyclist.

The support body 3 is connected to the handlebars 2 in a *per* se known way, for example by means of a clip (not shown).

To the support body 3 a first lever 6, or brake lever, is associated, that actuates the brake cable 7 of the rear brake (not shown).

A second lever 8, or upward gear shifting lever, is arranged adjacent along the brake lever 6, and a third lever, or downward gear shifting lever (not visible in the figure), projects from the inner side wall 3a of the support body 3 to be actuated by the cyclist's thumb.

The brake lever 6 traction acts upon the brake cable 7 which slides inside the outer sheath 10 inserted with one 10a of its ends inside a first cylindrical recess 11 made in the support body 3. The upward and downward gear shifting levers 8 traction and release act, respectively, on a control cable 12 of the rear derailleur (not shown). The control cable 12 of the rear derailleur slides inside the outer sheath 13 inserted with its end 13a inside a second cylindrical recess 14 made in the support body 3 close to its side 4 for connection to the handlebars 2. The outer sheaths 10, 13 and the respective brake and control cables 7, 12, advantageously come out from the control device 1 in a position adjacent to the handlebars, as can be seen in fig. 1.

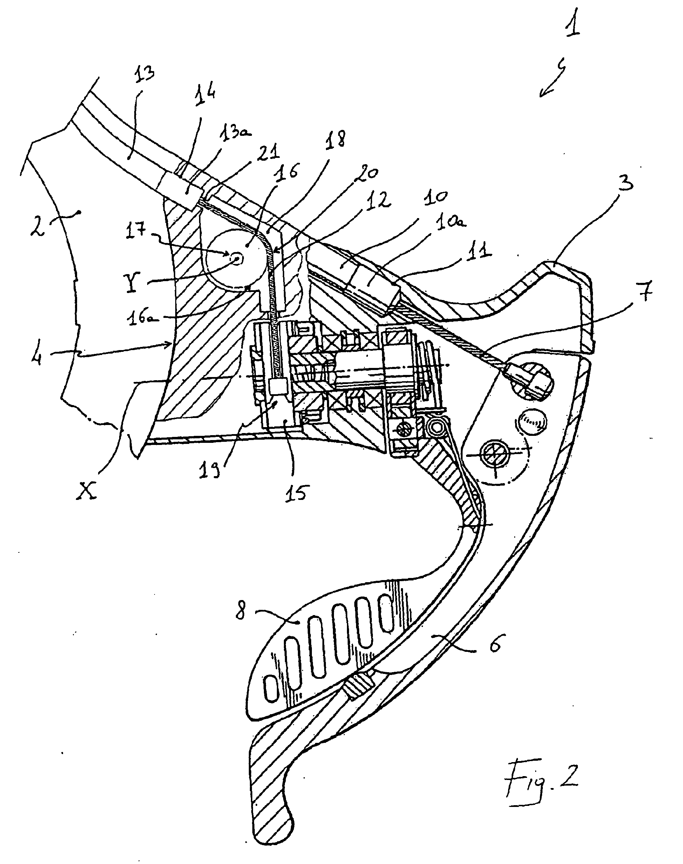

The traction and the release of the control cable 12 of the derailleur through the upward and downward gear shifting levers 8 takes place by winding and unwinding the control cable 12 about a cable-winding bush 15 arranged with its rotation axis X substantially parallel to the advancing axis of the bicycle. The traction or release mechanism of the control cable 12 through the cable-winding bush 15 and the actuation of the brake cable 7 through the brake lever 6 is shown in detail in fig. 2 and corresponds to what is described in patent EP 504 118 B1 to the Applicant and incorporated herein by reference.

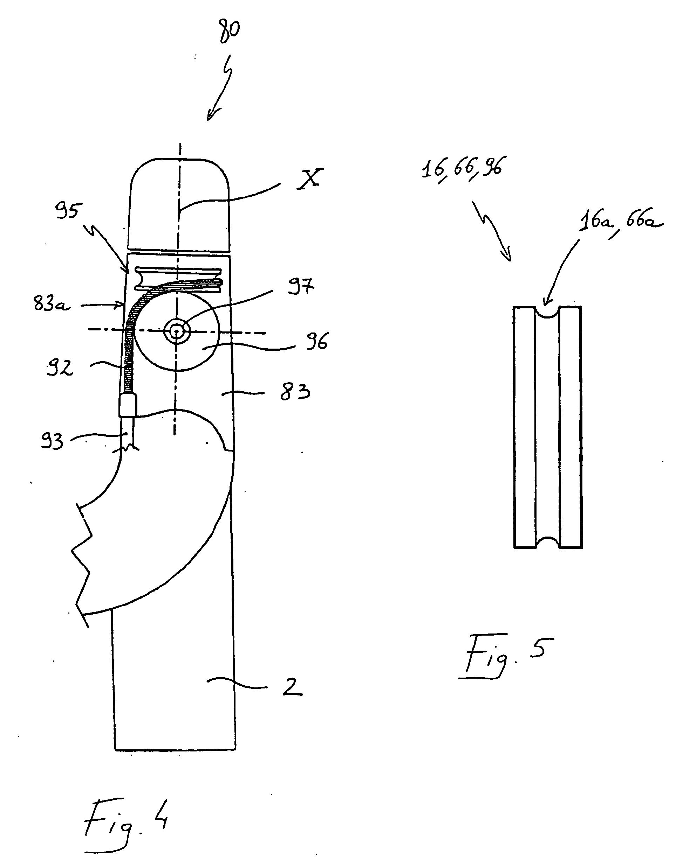

As can be seen in fig. 2, between the cable-winding bush 15 and the side 4 of the support body 3 for connection to the handlebars 2 of the bicycle, a deflection mechanism is arranged consisting of a deflection wheel 16, idle mounted on its central shaft 17, having on the outer surface a circumferential throat 16a, visible in fig. 5, on which the control cable 12 of the rear derailleur rests. The deflection wheel 16 has the rotation axis Y substantially perpendicular to the rotation axis X of the cable-winding bush 15 and it is arranged in a seat 18 formed in the support body 3 in displaced position, with respect to the central middle plane, towards the outer side surface 3b of the support body 3, i.e. towards the observer with reference to fig. 2. In such a way, the control cable 12 has a straight conformation between the point 19 where it is connected to the cable-winding bush 15 and the zone of first contact 20 with the outer surface of the deflection wheel 16. In the upper zone of the seat 18 an opening 21 is made for passage of the control cable 12 of the derailleur, that communicates with the second cylindrical recess 14 where the end 13a of the outer sheath 13 is arranged, in which the control cable 12 is inserted. The control cable 12 is inserted straight and coaxially into the outer sheath 13 to continue with it along the handlebars 2 and the frame of the bicycle to reach the derailleur. The direction of straight insertion of the control cable 12 in the outer sheath 13 allows the contact surfaces between the control cable 12 and the outer sheath 13 themselves to be reduced substantially to zero, substantially reducing the friction zones during gear shiftings to zero. Moreover, during the winding and the unwinding of the control cable 12 on and from the cable-winding bush 15, i.e. during the upward and downward gear shifting operations, the control cable 12 rests upon the throat 16a of the deflection wheel 16 which, rotating, follows the movement of the control cable 12. In such a way, the friction between the control cable 12 and the outer surface of the deflection wheel 16 advantageously has low values, being a rolling type friction.

In the embodiment shown and described, the angle between the straight zones of the control cable 12 defined between the point 19 where it is connected to the cable-winding bush 15 and the zone of first contact 20 with the deflection wheel 16 and between the deflection wheel 16 and the end 13a of the sheath 13 is equal to about 135°. In other embodiments, however, such an angle can be different according to the diameter and the position where the deflection wheel 16 is hinged, according to the size of the support body 3 of the control device 1 and according to the slope with which the cylindrical recess 14 is made in the support body 3.

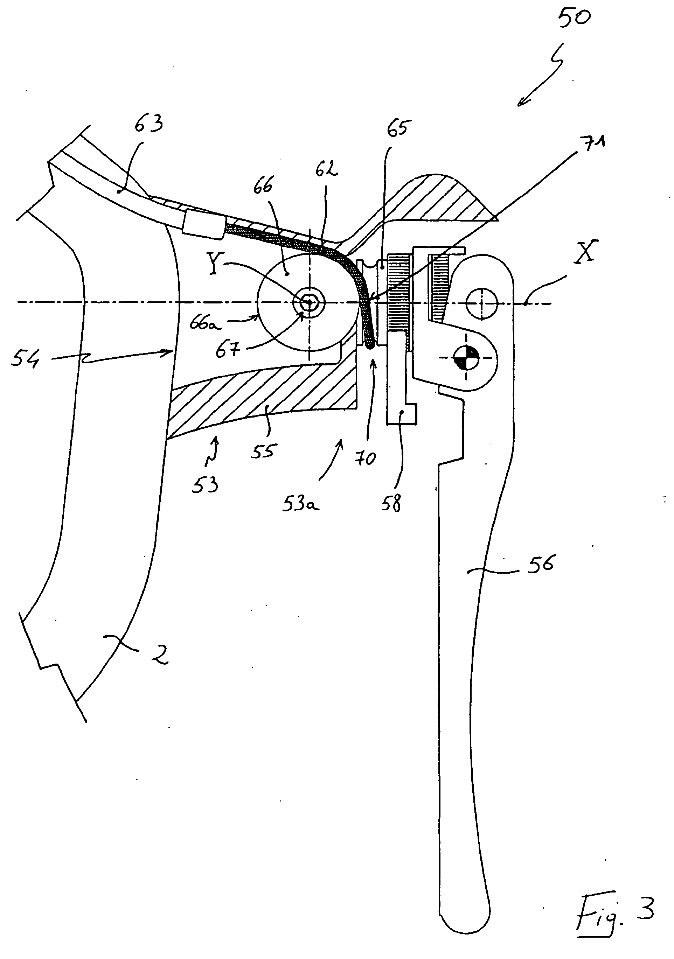

In figure 3 an embodiment of the control device of the invention is diagrammatically shown.

The control device 50 comprises a support body 53 connected through one side 54 to the handlebars 2 and a part 55, projecting from the side 54, that can be gripped by the cyclist.

The support body 53 is connected to the handlebars 2 in a *per* se known way, for example by means of a clip (not shown).

To the support body 53 a first lever 56, or brake lever, is associated, that actuates the rear brake (not shown). Such a lever 56 also constitutes the upward gear shifting lever and traction acts on the control cable 62 of the rear derailleur through the rotation of the cable-winding bush 65 in the direction of winding of the control cable 62 through ratchets, not shown in the figure, for example of the type described in the aforementioned U.S. patent No. 5,400,675. A second lever 58, arranged adjacent along the first lever 56, release acts on the control cable 62 of the rear derailleur through the rotation of the cable-winding bush 65 in the direction of unwinding of the control cable 62 through ratchets, not shown in the figure, and for example of the type described in the aforementioned U.S. patent No. 5,400,675.

The cable-winding bush 65 of the control cable 62 of the rear derailleur is positioned close to the front end 53a of the support body 53 and has its rotation axis X substantially coinciding with the advancing direction of the bicycle.

Between the cable-winding bush 65 and the side 54 of the support body 53 for connection to the handlebars 2 of the bicycle, a deflection wheel 66 is arranged, idle mounted on its central shaft 67, having on the outer surface a circumferential throat 66a, visible in fig. 5, on which the control cable 62 of the rear derailleur rests. The deflection wheel 66 has the rotation axis Y substantially perpendicular to the rotation axis X of the cable-winding bush 65 and is arranged in a seat formed in the support body 53 in a displaced position with respect to the central middle plane towards the outer side surface of the support body 53. In such a way the control cable 62 has a substantially straight conformation between the zone 70 where it leaves the cable-winding bush 65 and the zone of first contact 71 with the outer surface of the deflection wheel 66. The control cable 62 of the derailleur is inserted straight and coaxially into the outer sheath 63 to continue with it along the handlebars 2 and the frame of the bicycle to reach the derailleur. Like for the solution described with reference to figures 1 and 2, the contact surfaces between the control cable 62 and the outer sheath 63 are reduced substantially to zero and the rolling friction between the control cable 62 and the outer surface of the deflection wheel 66 advantageously has low values.

Moreover, the control cable 62 and the outer sheath 63 come out from the control device 50 in a position near to the handlebars 52 and do not project from the control device 50 itself.

In figure 4 another embodiment of the control device 80 of the invention is diagrammatically shown.

Such a solution differs from the one shown in figure 3 for the different arrangement of the deflection wheel 96. The deflection wheel 96 is idle mounted on its central shaft 97, perpendicular to the rotation axis X of the cable-winding bush 95, and it is arranged in a seat formed on top of the support body 83.

With such an arrangement of the deflection wheel 96, the control cable 92 and the outer sheath 93 come out from the control device 80 adjacent to the handlebars 2 and towards the inner side wall 83a of the support body 83.

## Claims

1. Control device (1; 50; 80) for driving a control cable (12; 62; 92) of a bicycle derailleur, comprising:
- a support body (3; 53; 83) connectable at one side (4; 54) to an end portion of the bicycle handlebars (2) and having a part (5; 55) projecting from said side (4; 54);
- a cable-winding bush (15; 65; 95) about which said control cable (12; 62; 92) is wound/unwound having a rotation axis essentially perpendicular to the end portion of the bicycle handlebars (2);
- at least one lever (8; 56) rotatable with respect to said support body (3; 53; 83) to drive said cable-winding bush (15; 65; 95) into rotation in a first direction of rotation, said control cable (12; 62; 92) coming out from said support body (3; 53; 83) from said side (4; 54) connectable to the handlebars (2),
**characterised in that** it comprises a deflection mechanism (16; 66; 96) for said control cable (12; 62; 92) arranged between said cable-winding bush (15; 65; 95) and said side (4; 54) of said support body (3; 53; 83), said deflection mechanism (16; 66; 96) comprising a wheel (16; 66; 96) idle mounted in said support body (3; 53; 83).

2. Device (1; 50; 80) according to claim 1, **characterised in that** said deflection wheel (16; 66; 96) has the rotation axis (Y) substantially perpendicular to the rotation axis (X) of said cable-winding bush (15; 65; 95).

3. Device (1; 50; 80) according to claim 1, **characterised in that** said deflection wheel (16; 66; 96) circumferentially has a throat (16a; 66a) housing said control cable (12; 62; 92).

4. Device (1; 50; 80) according to claim 1, **characterised in that** said support body (3; 53; 83) has a recess (14) suitable for receiving the end (13a) of an outer sheath (13) for said control cable (12; 62; 92).

5. Device (1; 50; 80) according to claim 4, **characterised in that** said recess (14) is made close to said side (4; 54) of said support body (3; 53; 83).

6. Device (1; 50; 80) according to claim 1, **characterised in that** it further comprises a brake lever (6; 56) for actuating a brake cable (7).

7. Device (1; 50; 80) according to claim 6, **characterised in that** said brake lever (56) and said at least one lever (56) coincide.

8. Device (1; 50; 80) according to claim 6, **characterised in that** said support body (3; 53; 83) has a recess (11) suitable for receiving the end (10a) of an outer sheath (10) for said brake cable (7).

9. Device (1; 50; 80) according to claim 8, **characterised in that** said recess (11) is made close to said side (4; 54) of said support body (3; 53; 83).

10. Device (1; 50; 80) according to claim 1, **characterised in that** it comprises a second lever (58) rotatable with respect to said support body (3; 53; 83) to drive said cable-winding bush (15; 65; 95) into rotation in a second direction of rotation opposite the first.

## Patentansprüche

1. Bedienvorrichtung (1; 50; 80) zum Steuern eines Betätigungskabels (12; 62; 92) einer Fahrrad-Gangschaltung, die umfasst:
- einen Tragekörper (3; 53; 83), der an einer Seite (4; 54) mit einem Endabschnitt der Fahrrad-Lenkstange (2) verbunden werden kann und einen Teil (5; 55) aufweist, der von der Seite (4; 54) vorsteht;
- eine Kabelaufwickelbuchse (15; 65; 95), um die das Betätigungskabel (12; 62; 92) gewickelt/abgewickelt wird und die eine Drehachse im Wesentlichen senkrecht zu dem Endabschnitt der Fahrrad-Lenkstange (2) hat;
- wenigstens einen Hebel (8; 56), der in Bezug auf den Tragekörper (3; 53; 83) gedreht werden kann, um die Kabelaufwickelbuchse (15; 54; 95) in einer ersten Drehrichtung in Drehung zu versetzen,
wobei das Betätigungskabel (12; 62; 92) über die Seite (4; 54), die mit der Lenkstange verbunden werden kann, aus dem Tragekörper (3; 53; 83) austritt,
**dadurch gekennzeichnet, dass** sie einen Ablenkmechanismus (16; 66; 96) für das Betätigungskabel (12; 62; 92) umfasst, der zwischen der Kabelaufwickelbuchse (15; 65; 95) und der Seite (4; 54) des Tragekörpers (3; 53; 83) angeordnet ist,
wobei der Ablenkmechanismus (16; 66; 96) ein Rad (16; 66; 96) umfasst, das leerlaufend in dem Tragekörper (3; 53; 83) angebracht ist.

2. Vorrichtung (1; 50; 80) nach Anspruch 1, **dadurch gekennzeichnet, dass** die Drehachse (Y) des Ablenkrades (16; 66; 96) im Wesentlichen senkrecht zu der Drehachse (X) der Kabelaufwickelbuchse (15; 65; 95) ist.

3. Vorrichtung (1; 50; 80) nach Anspruch 1, **dadurch gekennzeichnet, dass** das Ablenkrad (16; 66; 96) in Umfangsrichtung eine Auskehlung (16a; 66a) aufweist, die das Betätigungskabel (12; 62; 92) aufnimmt.

4. Vorrichtung (1; 50; 80) nach Anspruch 1, **dadurch gekennzeichnet, dass** der Tragekörper (3; 53; 83) eine Vertiefung (14) aufweist, die sich dazu eignet, das Ende (13a) einer äußeren Ummantelung (13) für das Betätigungskabel (12; 62; 92) aufzunehmen.

5. Vorrichtung (1; 50; 80) nach Anspruch 4, **dadurch gekennzeichnet, dass** die Vertiefung nahe an der Seite (4; 54) des Tragekörpers (3; 53; 83) ausgebildet ist.

6. Vorrichtung (1; 50; 80) nach Anspruch 1, **dadurch gekennzeichnet, dass** sie des Weiteren einen Bremshebel (6; 56) zum Betätigen eines Bremskabels (7) umfasst.

7. Vorrichtung (1; 50; 80) nach Anspruch 6, **dadurch gekennzeichnet, dass** der Bremshebel (56) und der wenigstens eine Hebel (56) identisch sind.

8. Vorrichtung (1; 50; 80) nach Anspruch 6, **dadurch gekennzeichnet, dass** der Körper (3; 53; 83) eine Vertiefung (11) aufweist, die sich dazu eignet, das Ende (10a) einer äußeren Ummantelung (10) für das Bremskabel (7) aufzunehmen.

9. Vorrichtung (1; 50; 80) nach Anspruch 8, **dadurch gekennzeichnet, dass** die Vertiefung (11) nahe an der Seite (4: 54) des Tragekörpers (3; 53; 83) ausgebildet ist.

10. Vorrichtung (1; 50; 80) nach Anspruch 1, **dadurch gekennzeichnet, dass** sie einen zweiten Hebel (58) umfasst, der in Bezug auf den Tragekörper (3; 53; 83) gedreht werden kann, um die Kabelaufwickelbuchse (15; 65; 95) in einer zweiten Drehrichtung entgegengesetzt zu der ersten in Drehung zu versetzen.

## Revendications

1. Dispositif de commande (1 ; 50 ; 80) destiné à entraîner un câble de commande (12 ; 62 ; 92) d'un dérailleur de bicyclette, comprenant :
- un corps de support (3 ; 53 ; 83) pouvant être relié au niveau d'un côté (4 ; 54) à une partie d'extrémité du guidon de bicyclette (2) et ayant une partie (5 ; 55) dépassant dudit côté (4 ; 54),
- une bague d'enroulement de câble (15 ; 65 ; 95) autour de laquelle ledit câble de commande (12 ; 62 ; 92) est enroulé/déroulé comportant un axe de rotation globalement perpendiculaire à la partie d'extrémité du guidon de bicyclette (2),
- au moins une manette (8 ; 56) pouvant tourner par rapport audit corps de support (3 ; 53 ; 83) pour entraîner ladite bague d'enroulement de câble (15 ; 65 ; 95) en rotation dans un premier sens de rotation,
ledit câble de commande (12 ; 62 ; 92) sortant dudit corps de support (3 ; 53 ; 83) depuis ledit côté (4 ; 54) pouvant être relié au guidon (2),
**caractérisé en ce qu'**il comprend un mécanisme de flexion (16 ; 66 ; 96) destiné audit câble de commande (12 ; 62 ; 92) agencé entre ladite bague d'enroulement de câble (15 ; 65 ; 95) et ledit côté (4 ; 54) dudit corps de support (3 ; 53 ; 83), ledit mécanisme de flexion (16 ; 66 ; 96) comprenant une roue (16 ; 66 ; 96) montée libre dans ledit corps de support (3 ; 53 ; 83).

2. Dispositif (1 ; 50 ; 80) selon la revendication 1, **caractérisé en ce que** ladite roue de flexion (16 ; 66 ; 96) comporte l'axe de rotation (Y) sensiblement perpendiculaire à l'axe de rotation (X) de ladite bague d'enroulement de câble (15 ; 65 ; 95).

3. Dispositif (1 ; 50 ; 80) selon la revendication 1, **caractérisé en ce que** ladite roue de flexion (16 ; 66 ; 96) comporte sur la circonférence une gorge (16a ; 66a) recevant ledit câble de commande (12 ; 62 ; 92).

4. Dispositif (1 ; 50 ; 80) selon la revendication 1, **caractérisé en ce que** ledit corps de support (3 ; 53 ; 83) comporte un évidement (14) approprié pour recevoir l'extrémité (13a) d'une gaine extérieure (13) destinée audit câble de commande (12 ; 62 ; 92).

5. Dispositif (1 ; 50 ; 80) selon la revendication 4, **caractérisé en ce que** ledit évidement (14) est rapproché dudit côté (4 ; 54) dudit corps de support (3 ; 53 ; 83).

6. Dispositif (1 ; 50 ; 80) selon la revendication 1, **caractérisé en ce qu'**il comprend en outre une poignée de frein (6 ; 56) destinée à actionner un câble de frein (7).

7. Dispositif (1 ; 50 ; 80) selon la revendication 6, **caractérisé en ce que** ladite manette de frein (56) et ladite au moins une manette (56) coïncident.

8. Dispositif (1 ; 50 ; 80) selon la revendication 6, **caractérisé en ce que** ledit corps de support (3 ; 53 ; 83) comporte un évidement (11) approprié pour recevoir l'extrémité (10a) d'une gaine extérieure (10) pour ledit câble de frein (7).

9. Dispositif (1 ; 50 ; 80) selon la revendication 8, **caractérisé en ce que** ledit évidement (11) est rapproché dudit côté (4 ; 54) dudit corps de support (3 ; 53 ; 83).

10. Dispositif (1 ; 50 ; 80) selon la revendication 1, **caractérisé en ce qu'**il comprend une deuxième manette (58) pouvant tourner par rapport audit corps de support (3 ; 53 ; 83) pour entraîner ladite bague d'enroulement de câble (15 ; 65 ; 95) en rotation dans un deuxième sens de rotation opposé au premier.
